# EUROPEAN PATENT SPECIFICATION

(11) **EP 3 182 015 B1**
(45) Date of publication and mention of the grant of the patent: **17.02.2021**
(21) Application number: 15845017.1
(22) Date of filing: 01.09.2015
(51) Int. Cl.: F23R 3/30, F23R 3/10, F23R 3/28, F23R 3/14, F23R 3/04

(54) **COMBUSTOR AND GAS TURBINE COMPRISING SAME**
VERBRENNER UND GASTURBINE DAMIT
CHAMBRE DE COMBUSTION ET TURBINE À GAZ LA COMPRENANT

(30) Priority: 22.09.2014 JP 2014192498
(43) Date of publication of application: 21.06.2017
(73) Proprietor: Mitsubishi Power, Ltd., Yokohama-shi, Kanagawa 220-8401 (JP)
(72) Inventor: MIYAUCHI Kotaro, Yokohama-shi Kanagawa 220-8401 (JP); NISHIDA Koichi, Yokohama-shi Kanagawa 220-8401 (JP); AKAMATSU Shinji, Yokohama-shi Kanagawa 220-8401 (JP); SAITO Keijiro, Tokyo 108-8215 (JP); TAKIGUCHI Satoshi, Tokyo 108-8215 (JP); SAITO Toshihiko, Tokyo 108-8215 (JP)
(74) Representative: Mader, Joachim
(86) International application number: PCT/JP2015/074833
(87) International publication number: WO 2016/047393

(56) References cited:
- JP-A- 2000 088 250
- JP-A- 2000 314 526
- JP-A- 2002 276 943
- JP-A- 2005 106 411
- JP-A- 2005 315 457
- JP-A- 2005 315 457
- JP-A- 2010 197 039
- JP-A- 2011 232 023
- US-A1- 2007 137 207
- US-A1- 2008 184 708
- US-A1- 2010 212 322
- US-A1- 2010 319 350

## Description

### Technical Field

The present invention relates to a combustor and a gas turbine comprising the same.

This patent claims priority based on Japanese Patent Application No. 2014-192498 filed in Japan on September 22, 2014.

### Background Art

For example, a combustor disclosed in Patent Document 1, indicated below, includes a nozzle, having a rod-shaped portion, that sprays fuel, and a cylinder, surrounding the outer circumference of the nozzle, that jets air and the fuel from the nozzle toward a downstream side.

Reference US 2010/0319350 A1 relates to a combustor in a gas turbine engine, and more particularly, to a combustor including a flashback resistant fuel injector system. A fuel injector assembly may thereby include a fuel shroud and a plurality of spanning members, which may be spaced circumferentially on the fuel shroud between the fuel shroud and a base plate assembly, which supports the fuel injector assembly within the combustor.

Reference US 2010/0212322 A1 relates to gas turbines and, in particular, to an air/fuel premixer for a gas turbine suitable for use with hydrogen containing fuels. A air/fuel premixer may thereby comprise a peripheral wall defining a mixing chamber, a nozzle disposed at least partially within the peripheral wall, an air inlet and a fuel inlet.

Reference JP 2005-105411 A discloses a pre-filmer type air blast atomizing nozzle, wherein an air shroud surrounds a liquid film forming body with an atomizing downstream tip.

### Citation List

### Patent Document

Patent Document 1: Japanese Unexamined Patent Application Publication No. 2005-315457A

### Summary of Invention

### Technical Problem

The fuel is burned in the combustor, and a combustion gas produced by that burning flows in the combustor. The combustor thus has multiple components present in a high-temperature environment. What is needed, therefore, is a way to extend the service life of a combustor including such components.

Accordingly, an object of the present invention is to provide a combustor that can have an extended service life, as well as a gas turbine including such a combustor. The present invention provides a solution according to the subject matter of the independent claims.

### Solution to Problem

The above problems are solved by a combustor according to claim 1. The two-part form of claim 1 is based on US 2010/0319350 A1.

According to the combustor of claim 1, the tapered surface is formed in the downstream end portion of the burner cylinder, and thus it is difficult for a gas containing fuel flowing on an inner circumferential side of the burner cylinder and air flowing on the outer circumferential side of the burner cylinder to form vortices on a downstream side of a downstream end of the burner cylinder. As such, according to this combustor, the possibility of flames forming near the downstream end of the burner cylinder can be reduced.

Incidentally, forming even a slight tapered surface in the downstream end portion of the burner cylinder makes it possible to achieve the effect of suppressing vortices to at least a small degree. However, it becomes easier for the gas containing the fuel and the air to form vortices on the downstream side of the downstream end of the burner cylinder when the tapered surface formation width of the tapered surface in the plate thickness direction is less than half the plate thickness of the part of the burner cylinder-forming plate where the tapered surface is not formed. Furthermore, these vortices increase the possibility of flames forming near the downstream end of the burner cylinder.

As opposed to this, when the tapered surface formation width of the tapered surface in the plate thickness direction is no less than half the plate thickness of the part of the burner cylinder-forming plate where the tapered surface is not formed, the gas containing the fuel and the air will substantially not form vortices on the downstream side of the downstream end of the burner cylinder; or, even if such vortices are formed, those vortices will be small. In the case where, for example, the tapered surface formation width of the tapered surface in the plate thickness direction is 60% of the plate thickness of the part of the burner cylinder-forming plate where the tapered surface is not formed, there is a possibility of the gas containing the fuel and the air forming small vortices on the downstream side of the downstream end of the burner cylinder. However, with such small vortices, it can be said that there is substantially no possibility of flames forming near the downstream end of the burner cylinder. Thus, according to this combustor, the tapered surface formation width of the tapered surface in the plate thickness direction is set to no less than half the plate thickness of the part of the burner cylinder-forming plate where the tapered surface is not formed.

Here, in the combustor according to the above-described aspect, an outer tapered surface may be formed in the outer circumferential side of the burner cylinder as the tapered surface, and a tapered surface formation width of the outer tapered surface in the plate thickness direction may be no less than half the plate thickness of the part of the burner cylinder-forming plate where the tapered surface is not formed.

According to this combustor, the air flowing along the outer circumferential side of the burner cylinder flows along the outer tapered surface, and thus this air approaches the burner axis while flowing toward the downstream side. As such, according to this combustor, a situation in which the gas containing the fuel flowing along the inner circumferential side of the burner cylinder spreads out in radial directions relative to the burner axis can be suppressed.

Additionally, in the combustor according to the above-described aspect, as the tapered surface, an outer tapered surface may be formed in the outer circumferential side of the burner cylinder and an inner tapered surface may be formed in an inner circumferential side of the burner cylinder, and a width obtained by combining the tapered surface formation width of the outer tapered surface in the plate thickness direction and a taper formation width of the inner tapered surface in the plate thickness direction may be no less than half the plate thickness of the part of the burner cylinder-forming plate where the tapered surface is not formed.

According to this combustor, the tapered surface is formed in the downstream end portion of the burner cylinder, and furthermore, the tapered surface formation width, in the plate thickness direction, of the tapered surface including the outer tapered surface and the inner tapered surface is no less than half the plate thickness of the part of the burner cylinder-forming plate where the tapered surface is not formed. As such, according to this combustor, the possibility of flames forming near the downstream end of the burner cylinder can be reduced.

Here, in the combustor in which the outer tapered surface and the inner tapered surface are formed, the tapered surface formation width of the outer tapered surface in the plate thickness direction may be greater than the taper formation width of the inner tapered surface in the plate thickness direction.

On the downstream side of the downstream end of the burner cylinder in this combustor, the flow of the air flowing along the outer tapered surface has greater influence than the flow of the gas containing the fuel flowing along the inner tapered surface. As such, according to this combustor, a situation in which the gas containing the fuel jetted from the burner cylinder spreads out in radial directions relative to the burner axis can be suppressed.

Additionally, in the combustor according to the above-described aspect, an inner tapered surface may be formed in an inner circumferential side of the burner cylinder as the tapered surface, and a taper formation width of the inner tapered surface in the plate thickness direction may be no less than half the plate thickness of the part of the burner cylinder-forming plate where the tapered surface is not formed.

According to this combustor as well, the tapered surface is formed in the downstream end portion of the burner cylinder, and furthermore, the tapered surface formation width of the inner tapered surface in the plate thickness direction is no less than half the plate thickness of the part of the burner cylinder-forming plate where the inner tapered surface is not formed. As such, according to this combustor, the possibility of flames forming near the downstream end of the burner cylinder can be reduced.

In any of the above-described combustors in which the outer tapered surface is formed, the combustor may include a plurality of burners, each having the nozzle and the burner cylinder. Here, the burner axes of the plurality of burners may be parallel to each other; at least a first outer circumference portion that is a part of the outer circumference of the burner cylinder of a first burner that is one of the plurality of burners may face a part of an inner circumference of the outside flow path cylinder such that a first purge air flow path serving as the purge air flow path is formed between the first outer circumference portion and the part of the inner circumference of the outside flow path cylinder; a second purge air flow path in which air flows toward the downstream side may be formed between a part of an outer circumference of the burner cylinder of a second burner that, of the plurality of burners, is adjacent to the first burner, and a second outer circumference portion that is a part of the outer circumference of the burner cylinder of the first burner; and an angle of the outer tapered surface in the second outer circumference portion relative to the burner axis may be greater than an angle of the outer tapered surface in the first outer circumference portion relative to the burner axis.

To suppress disturbances in the flow of gas flowing along the inner and outer circumferences of the burner cylinder and reduce gas flow resistance, it is preferable that the angle of the tapered surface relative to the burner axis be small. However, according to this combustor, the angle of the outer tapered surface in the second outer circumference portion relative to the burner axis is greater than the angle of the outer tapered surface in the first outer circumference portion relative to the burner axis. Furthermore, according to this combustor, the second burner is adjacent to the second outer circumference portion of the first burner. Accordingly, if the gas containing the fuel, which has flowed along the inner circumferential side of the first burner cylinder, is floating near the downstream end of the part where the second outer circumference portion is formed in the downstream end portion of the first burner cylinder, it is possible that the fuel will ignite near that downstream end. However, according to this combustor, although doing so does slightly increase the resistance to the flow of gas flowing in the inner and outer circumferences of the first burner cylinder, the angle of the outer tapered surface formed in the second outer circumference portion relative to the burner axis is made greater than the angle of the outer tapered surface formed in the first outer circumference portion relative to the burner axis in order to ensure that the gas containing the fuel jetted from the first burner cylinder moves away from the adjacent second burner.

In the combustor including the first burner and the second burner, the first burner may be a premixed combustion burner that burns fuel jetted from the burner cylinder of the first burner through premixed combustion; the second burner may be a diffusion combustion burner that burns fuel jetted from the burner cylinder of the second burner through diffusion combustion; a plurality of the first burners may be arranged in a circumferential direction centered on the second burner; and the outside flow path cylinder may have a cylindrical shape centered on the second burner so as to cover the plurality of first burners.

Additionally, in any of the above-described combustors, a tapered surface may be formed in a downstream end portion of the outside flow path cylinder such that a plate thickness of an outside flow path cylinder-forming plate that forms the outside flow path cylinder gradually thins as the outside flow path cylinder-forming plate extends toward the downstream side, and a tapered surface formation width of the tapered surface in the plate thickness direction may be no less than half the plate thickness of the outside flow path cylinder-forming plate.

According to this combustor, resistance to the flow of air flowing in the purge air flow path can be suppressed.

According to an aspect of the present invention for achieving the above-described object, a gas turbine includes:
any one of the above-described combustors; a compressor that compresses air and supplies the air to the combustor; and a turbine that is driven by combustion gas formed by burning a fuel in the combustor.

### Advantageous Effects of Invention

According to an aspect of the present invention, thermal damage and the like in a burner cylinder can be suppressed and the service life of a combustor can be extended.

### Brief Description of Drawings

FIG. 1 is a schematic view illustrating the configuration of a gas turbine according to an embodiment of the present invention.
FIG. 2 is a cross-sectional view of the vicinity of a combustor in the gas turbine according to the embodiment of the present invention.
FIG. 3 is a cross-sectional view illustrating the combustor according to the embodiment of the present invention.
FIG. 4 is a view taken from the arrow IV indicated in FIG. 3.
FIG. 5 is a cross-sectional view of the vicinity of a main burner according to the embodiment of the present invention.
FIG. 6 is a cross-sectional view of the vicinity of a first outer circumference portion of a main burner cylinder according to the embodiment of the present invention.
FIG. 7 is a cross-sectional view of the vicinity of a second outer circumference portion of the main burner cylinder according to the embodiment of the present invention.
FIG. 8 is a cross-sectional view of the vicinity of a first outer circumference portion of a main burner cylinder according to a comparative example.
FIG. 9 is a cross-sectional view of the vicinity of a first outer circumference portion of the main burner cylinder according to a first modified example of the present invention.
FIG. 10 is a cross-sectional view of the vicinity of a first outer circumference portion of the main burner cylinder according to a second modified example of the present invention.
FIG. 11 is a cross-sectional view of the vicinity of a first outer circumference portion of the main burner cylinder according to a third modified example of the present invention.
FIG. 12 is a cross-sectional view of the vicinity of a first outer circumference portion of the main burner cylinder according to a fourth modified example of the present invention.
FIG. 13 is a cross-sectional view of the vicinity of a first outer circumference portion of the main burner cylinder according to a fifth modified example of the present invention.

### Description of Embodiments

An embodiment of a gas turbine according to the present invention, and several modified examples of a combustor included in the gas turbine, will be described below in detail with reference to the drawings.

### Embodiment

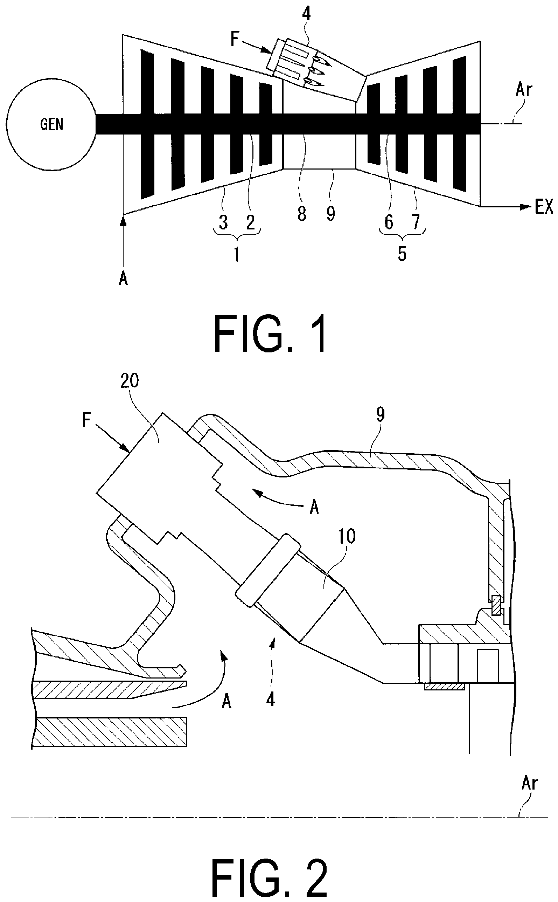

As illustrated in FIG. 1, a gas turbine according to the present embodiment includes a compressor 1 that generates compressed air by compressing outside air, a plurality of combustors 4 that generate a combustion gas by burning fuel F in the compressed air, and a turbine 5 driven by the combustion gas.

The compressor 1 has a compressor rotor 2 that rotates about a rotational axis Ar and a compressor casing 3 that covers the compressor rotor 2 while allowing the compressor rotor 2 to rotate. The turbine 5 has a turbine rotor 6 that rotates about a rotational axis Ar and a turbine casing 7 that covers the turbine rotor 6 while allowing the turbine rotor 6 to rotate. The rotational axis Ar of the compressor rotor 2 and the rotational axis Ar of the turbine rotor 6 are located on the same straight line. The compressor rotor 2 and the turbine rotor 6 are connected with each other to form a gas turbine rotor 8. Meanwhile, the compressor casing 3 and the turbine casing 7 are connected with each other to form a gas turbine casing 9.

A generator rotor, for example, is connected to the gas turbine rotor 8. Furthermore, the combustors 4 are fixed to the gas turbine casing 9.

As illustrated in FIG. 2, each combustor 4 includes a combustion liner (or transition piece) 10 and a fuel jetting device 20. The fuel F is burned inside the combustion liner 10, and the combustion gas generated by burning the fuel F is guided to the turbine 5. The fuel jetting device 20 jets the fuel F and air A into the combustion liner 10.

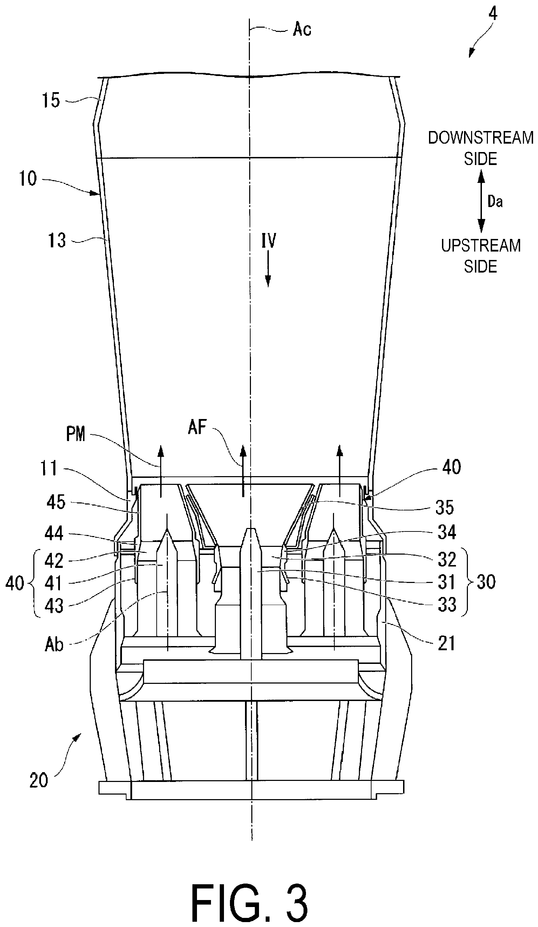

As illustrated in FIG. 3, the fuel jetting device 20 includes: a pilot burner (second burner or diffusion combustion burner) 30 that burns the jetted fuel through diffusion combustion; main burners (first burners or premixed combustion burners) 40 that burn the jetted fuel through premixed combustion; and a burner holding cylinder 21 that holds the pilot burner 30 and the main burners 40.

The pilot burner 30 includes: a rod-shaped pilot nozzle 31 centered on a combustor axis Ac and extending in an axial direction Da; a pilot burner cylinder 33 that covers the outer circumference of the pilot nozzle 31; and a plurality of revolving plates 32 that cause the compressed air to swirl around the combustor axis Ac. Here, one side in the axial direction Da, which is the direction in which the combustor axis Ac extends, will be referred to as an upstream side, and the other side in the axial direction Da will be referred to as a downstream side. The combustor axis Ac is also a burner axis of the pilot burner 30.

A spraying hole for spraying the fuel is formed in a downstream side end of the pilot nozzle 31. The plurality of revolving plates 32 are provided downstream from the location where the spraying hole is formed in the pilot nozzle 31. Each revolving plate 32 extends from the outer circumference of the pilot nozzle 31 in a direction including a radial direction component, and is connected to an inner circumferential surface of the pilot burner cylinder 33. The pilot burner cylinder 33 includes a main portion 34 located on the outer circumference of the pilot nozzle 31, and a cone portion 35 that is connected to a downstream side of the main portion 34 and gradually flares outward as the cone portion 35 extends in the downstream direction. The plurality of revolving plates 32 are connected to an inner circumferential surface of the main portion 34 in the pilot burner cylinder 33. The compressed air compressed by the compressor 1 flows into the pilot burner cylinder 33 from the upstream side thereof. The pilot burner cylinder 33 jets the fuel sprayed from the pilot nozzle 31, along with the compressed air, from a downstream end thereof. This fuel is burned in the combustion liner 10 through diffusion combustion.

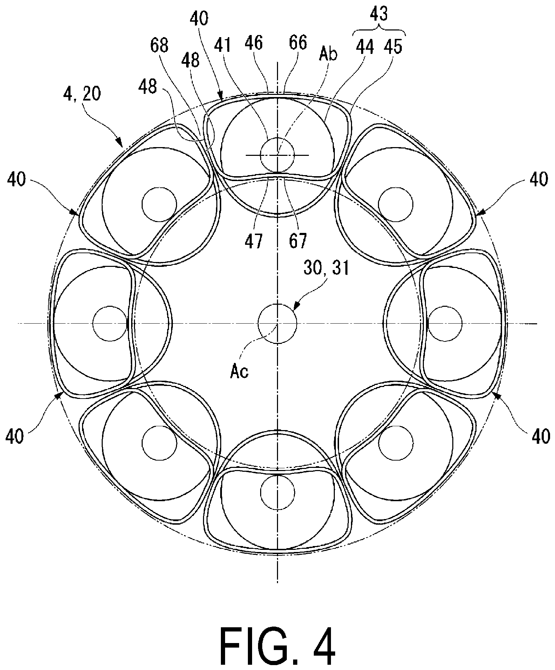

As illustrated in FIG. 4, the plurality of main burners 40 are arranged in a circumferential direction, centered on to the combustor axis Ac, so as to surround the outer circumferential side of the pilot burner 30.

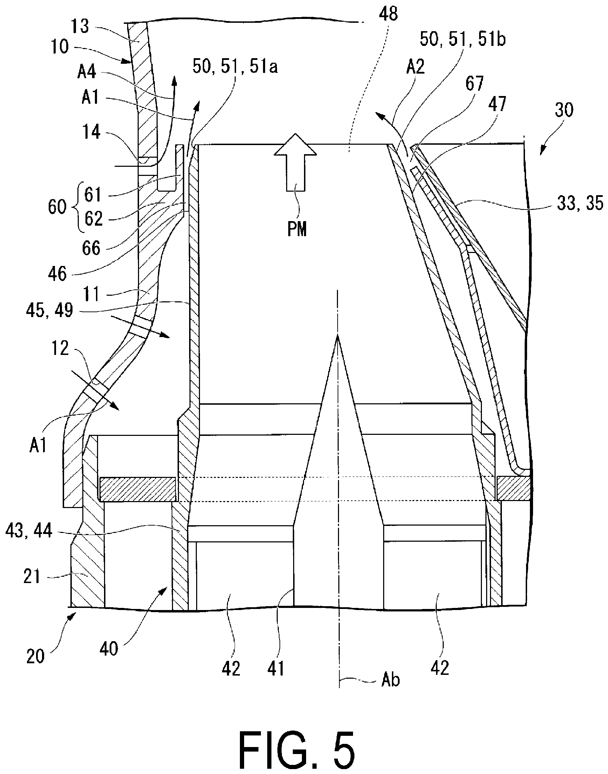

As illustrated in FIGS. 3 and 5, each main burner 40 includes: a rod-shaped main nozzle 41, centered on a burner axis Ab parallel to the combustor axis Ac, and extending in the axial direction Da; a main burner cylinder 43 that covers the outer circumference of the main nozzle 41; and a plurality of revolving plates 42 that cause the compressed air to swirl around the burner axis Ab. Because the burner axis Ab of the main burner 40 is parallel to the combustor axis Ac, the axial direction Da relative to the combustor axis Ac is the same direction as the axial direction Da relative to the burner axis Ab. Likewise, the upstream side in the axial direction Da relative to the combustor axis Ac corresponds to the upstream side in the axial direction Da relative to the burner axis Ab, and the downstream side in the axial direction Da relative to the combustor axis Ac corresponds to the downstream side in the axial direction Da relative to the burner axis Ab.

A spraying hole for spraying the fuel is formed in a part midway along the main nozzle 41 in the axial direction Da. The plurality of revolving plates 42 are provided near the location where the spraying hole is formed in the main nozzle 41. Each revolving plate 42 extends from the outer circumference of the main nozzle 41 in a direction including a radial direction component, and is connected to an inner circumferential surface of the main burner cylinder 43. The main burner cylinder 43 includes a main portion 44 located on the outer circumference of the main nozzle 41, and an extended portion 45 that is connected to a downstream side of the main portion 44 and extends in the downstream direction. The plurality of revolving plates 42 are connected to an inner circumferential surface of the main portion 44 in the main burner cylinder 43. The compressed air compressed by the compressor 1 flows into the main burner cylinder 43 from the upstream side thereof. In the main burner cylinder 43, the compressed air and the fuel sprayed from the main nozzle 41 are mixed to form a premixed gas PM. The main burner cylinder 43 jets the premixed gas PM from the downstream end thereof. The fuel in the premixed gas PM is burned through premixed combustion in the combustion liner 10.

Here, a spraying hole for spraying the fuel may be formed in the revolving plates 42, and the fuel may be sprayed into the main burner cylinder 43 from this spraying hole. In this case, the part corresponding to the rod-shaped main nozzle 41 described above constitutes a hub rod, and the main nozzle is formed including this hub rod and the plurality of revolving plates 42. Fuel is supplied into the hub rod from the exterior, and the fuel is supplied from the hub rod to the revolving plates 42.

As illustrated in FIG. 4, the main portion 44 of the main burner cylinder 43 has a circular shape when viewed from the axial direction Da. Meanwhile, when viewed from the axial direction Da, the extended portion 45 of the main burner cylinder 43 has an arch shape formed by a large circular arc centered on the combustor axis Ac, a small circular arc located further toward the combustor axis Ac than the large circular arc and centered on the combustor axis Ac, and connection lines extending in a radial direction relative to the combustor axis Ac and linearly connecting ends of the large circular arc to corresponding ends of the small circular arc. Of the outer circumference of the extended portion 45, a portion corresponding to the large circular arc constitutes a first outer circumference portion 46, a portion corresponding to the small circular arc constitutes a second outer circumference portion 47, and portions corresponding to the connection lines constitute third outer circumference portions 48.

As illustrated in FIGS. 3 and 5, the burner holding cylinder 21 has a cylindrical shape centered on the combustor axis Ac and covers the outer circumferential side of the main portions 44 of the plurality of main burner cylinders 43.

The combustion liner 10 includes: a connecting portion 11 on an inner circumferential side of which the extended portions 45 of the plurality of main burner cylinders 43 are located; a combustion portion 13 forming a fuel region in which the fuel jetted from the main burners 40 and the pilot burner 30 is burned; and a combustion gas guide portion 15 that guides the combustion gas generated by burning the fuel to the turbine 5. Both the connecting portion 11 and the combustion portion 13 have a cylindrical shape centered on the combustor axis Ac. The combustion gas guide portion 15 has a tubular shape. An upstream end of the connecting portion 11 of the combustion liner 10 is connected to the burner holding cylinder 21. The combustion portion 13 of the combustion liner 10 is formed on the downstream side of the connecting portion 11 of the combustion liner 10. The combustion gas guide portion 15 of the combustion liner 10 is formed on the downstream side of the combustion portion 13 of the combustion liner 10.

A connecting portion air hole 12 is formed in the cylindrical connecting portion 11 passing therethrough from the outer circumferential side to the inner circumferential side, so as to guide the compressed air from the compressor 1 as first purge air A1 to the inner circumferential side. An outside flow path cylinder 60 is disposed in the vicinity of a boundary between the connecting portion 11 and the combustion portion 13 of the combustion liner 10, the outside flow path cylinder 60 forming a first purge air flow path 66 between the outer circumferential sides of the plurality of main burners 40 and the inner circumferential side of the outside flow path cylinder 60 on the inner circumferential side of that boundary. The outside flow path cylinder 60 includes a cylindrical main portion 61 centered on the combustor axis Ac and a connecting portion 62 extending from a downstream side of the main portion 61 toward the outer circumferential side and connected to the combustion liner 10. A film air hole 14 is formed in a part of the combustion liner 10 opposing the main portion 61 of the outside flow path cylinder 60, passing through the combustion liner 10 from the outer circumferential side to the inner circumferential side, so as to guide the compressed air from the compressor 1 as film air A4 to the inner circumferential side. The aforementioned first purge air flow path 66, in which the first purge air A1 flows from the upstream side to the downstream side, is formed between the inner circumferential side of the main portion 61 of the outside flow path cylinder 60 and the first outer circumference portions 46 of the extended portions 45 of the plurality of main burner cylinders 43.

A second purge air flow path 67, in which second purge air A2 flows from the upstream side to the downstream side, is formed between the second outer circumference portions 47 of the extended portions 45 of the plurality of main burner cylinders 43 and the outer circumference of the cone portion 35 of the pilot burner cylinder 33.

Additionally, as illustrated in FIG. 4, a third purge air flow path 68 through which third purge air flows from the upstream side to the downstream side is formed between the third outer circumference portions 48 of the extended portions 45 of the main burner cylinders 43 adjacent to each other in a circumferential direction centered on the combustor axis Ac. The third purge air and the aforementioned second purge air A2 are both compressed air that has been compressed by the compressor 1 and has flowed into the inner circumferential side of the burner holding cylinder 21.

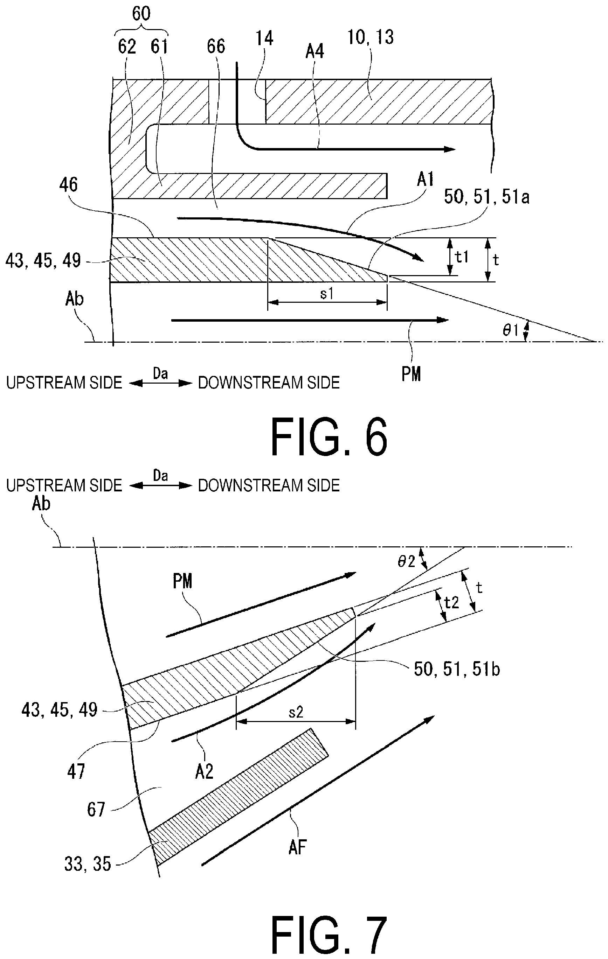

As illustrated in FIGS. 6 and 7, a tapered surface 50 is formed in the downstream end portion of the main burner cylinder 43 such that the plate thickness of a burner cylinder-forming plate 49 that forms the main burner cylinder 43 gradually thins as the burner cylinder-forming plate 49 extends toward the downstream side. This tapered surface 50 is an outer tapered surface 51, formed in the outer circumferential side of the main burner cylinder 43, that slopes so as to gradually approach the inner circumferential surface of the main burner cylinder 43 as the outer tapered surface extends toward the downstream side. The outer tapered surface 51 is formed across the entire outer circumference of the main burner cylinder 43. As such, the outer tapered surface 51 includes an outer tapered surface 51a formed in the first outer circumference portion 46 of the main burner cylinder 43, as illustrated in FIG. 6, and an outer tapered surface 51b formed in the second outer circumference portion 47 of the main burner cylinder 43, as illustrated in FIG. 7. The outer tapered surface 51 also includes an outer tapered surface (not illustrated) formed in the third outer circumference surface of the main burner cylinder 43.

As illustrated in FIG. 6, a tapered surface formation width t1 of the outer tapered surface 51a formed in the first outer circumference portion 46, in a plate thickness direction, is no less than half a plate thickness t of a part of the burner cylinder-forming plate 49 where the outer tapered surface 51a is not formed. More preferably, the tapered surface formation width t1 of the outer tapered surface 51a formed in the first outer circumference portion 46, in the plate thickness direction, is no less than 60% of the plate thickness t of the part of the burner cylinder-forming plate 49 where the outer tapered surface 51a is not formed. Note that the plate thickness t serving as a reference, mentioned above, is the plate thickness of a furthest downstream part in the part of the burner cylinder-forming plate 49 where the outer tapered surface 51a is not formed.

A tapered surface formation length s1 of the outer tapered surface 51a formed in the first outer circumference portion 46, in the axial direction Da, is longer than the aforementioned tapered surface formation width t1.

An angle θ1 of the outer tapered surface 51a formed in the first outer circumference portion 46 relative to the burner axis Ab is no greater than 50° and no less than 20° (50° ≥ θ1 ≥ 20°). Here, the inner circumferential surface and the outer circumferential surface of the burner cylinder-forming plate 49 at the part thereof where the first outer circumference portion 46 is formed are both parallel to the burner axis Ab. Accordingly, the angles of the outer tapered surface 51a relative to the inner circumferential surface and the outer circumferential surface of the burner cylinder-forming plate 49 at the outer tapered surface 51a are also no greater than 50° and no less than 20°. Here, the angle θ1 of the outer tapered surface 51a relative to the burner axis Ab is an angle in a virtual plane that contains the burner axis Ab and intersects with the outer tapered surface 51a. Hereinafter, the angles of the tapered surface 50 relative to the burner axis Ab are angles in a virtual plane that contains the burner axis Ab and intersects with the tapered surface 50.

Meanwhile, as illustrated in FIG. 7, a tapered surface formation width t2 of the outer tapered surface 51b formed in the second outer circumference portion 47, in the plate thickness direction, is no less than half the plate thickness t of a part of the burner cylinder-forming plate 49 where the outer tapered surface 51b is not formed. More preferably, the tapered surface formation width t2 of the outer tapered surface 51b formed in the second outer circumference portion 47, in the plate thickness direction, is no less than 60% of the plate thickness t of the part of the burner cylinder-forming plate 49 where the outer tapered surface 51b is not formed.

A tapered surface formation length s2 of the outer tapered surface 51b formed in the second outer circumference portion 47, in the axial direction Da, is no less than the aforementioned tapered surface formation width t2. Here, from the standpoint of the ease of processing, the tapered surface formation length s2 of the outer tapered surface 51b formed in the second outer circumference portion 47, in the axial direction Da, is the same length as the tapered surface formation length s1 of the outer tapered surface 51a formed in the first outer circumference portion 46, in the axial direction Da.

An angle θ2 of the outer tapered surface 51b formed in the second outer circumference portion 47 relative to the burner axis Ab is greater than the angle θ1 of the outer tapered surface 51a formed in the first outer circumference portion 46 relative to the burner axis Ab. Preferably, the angle θ2 is no greater than 70° and no less than 30° (70° ≥ θ2 ≥ 30°).

Additionally, although not illustrated, a tapered surface formation width of the outer tapered surface 51 formed in the third outer circumference portion 48, in a plate thickness direction, is also no less than half the plate thickness t of the part of the burner cylinder-forming plate 49 where the outer tapered surface 51 is not formed. More preferably, the tapered surface formation width of the outer tapered surface 51 formed in the third outer circumference portion 48, in the plate thickness direction, is also no less than 60% of the plate thickness t of the part of the burner cylinder-forming plate 49 where the outer tapered surface 51 is not formed. The angle of the outer tapered surface 51 formed in the third outer circumference portion 48 relative to the burner axis Ab is no greater than 50° and no less than 20°.

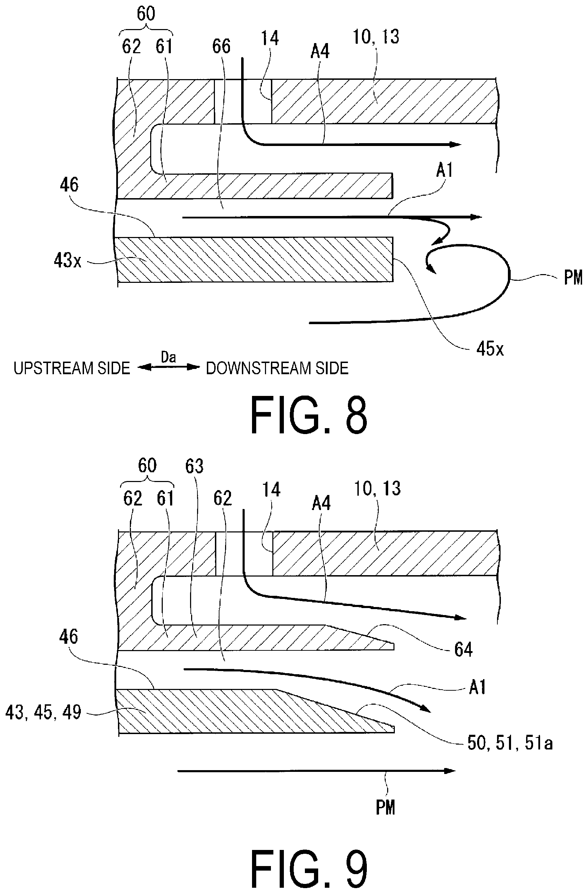

The flow of a gas in the vicinity of a downstream end portion of a main burner cylinder 43x according to a comparative example in which a tapered surface is not formed in the downstream end portion of the main burner cylinder 43x will be described next using FIG. 8.

In the case where a tapered surface is not formed in the downstream end portion of the main burner cylinder 43x, a downstream end surface 45x of the main burner cylinder 43x is a flat surface perpendicular to the inner circumferential surface and the outer circumferential surface of the main burner cylinder 43x. In this case, on the downstream side of the downstream end surface 45x of the main burner cylinder 43x, the premixed gas PM flowing from the main burner cylinder 43x forms a vortex, and the first purge air A1 flowing from the first purge air flow path 66 formed on the outer circumferential side of the first outer circumference portion 46 of the main burner cylinder 43x forms a vortex.

When the premixed gas PM and the first purge air A1 form vortices on the downstream side of the downstream end surface 45x of the main burner cylinder 43x in this manner, there is an increased possibility of flames forming near the downstream end surface 45x of the main burner cylinder 43x. Thus, according to the comparative example, flames may form near the downstream end surface 45x of the main burner cylinder 43x depending on the operating state of the combustor. As such, according to the comparative example, the downstream end portion of the main burner cylinder 43x will be put in a high-temperature environment, which subjects the main burner cylinder 43x to thermal damage and shortens the service life of the main burner cylinder 43x.

On the other hand, in the present embodiment, the outer tapered surface 51 is formed across the entire outer circumference of the main burner cylinder 43 in the downstream end portion of the main burner cylinder 43 as described earlier. Thus, according to the present embodiment, it is difficult for the premixed gas PM and the first purge air A1 to form vortices on the downstream side of the downstream end of the main burner cylinder 43. As such, according to the present embodiment, the possibility of flames forming near the downstream end of the main burner cylinder 43 can be reduced. Thus, according to the present embodiment, thermal damage and the like in the main burner cylinder 43 can be suppressed and the service life of the main burner cylinder 43 can be extended more than is possible with the comparative example.

Incidentally, forming even a slight tapered surface 50 in the downstream end portion of the main burner cylinder 43 makes it possible to achieve the effect of suppressing vortices to at least a small degree. However, it becomes easier for the premixed gas PM and the first purge air A1 to form vortices on the downstream side of the downstream end of the main burner cylinder 43 when the tapered surface formation width of the tapered surface 50 in the plate thickness direction is less than half the plate thickness t of the part of the burner cylinder-forming plate 49 where the tapered surface 50 is not formed. Furthermore, these vortices increase the possibility of flames forming near the downstream end of the main burner cylinder 43.

As opposed to this, when the tapered surface formation width of the tapered surface 50 in the plate thickness direction is no less than half the plate thickness t of the part of the burner cylinder-forming plate 49 where the tapered surface 50 is not formed, the premixed gas PM and the first purge air A1 will substantially not form vortices on the downstream side of the downstream end of the main burner cylinder 43; or, even if such vortices are formed, those vortices will be small. In the case where, for example, the tapered surface formation width of the tapered surface 50 in the plate thickness direction is 60% of the plate thickness t of the part of the burner cylinder-forming plate 49 where the tapered surface 50 is not formed, there is a possibility of the premixed gas PM and the first purge air A1 forming small vortices on the downstream side of the downstream end of the main burner cylinder 43. However, with such small vortices, it can be said that there is substantially no possibility of flames forming near the downstream end of the main burner cylinder 43. Thus, according to the present embodiment, the tapered surface formation width of the tapered surface 50 in the plate thickness direction is set to no less than half the plate thickness t of the part of the burner cylinder-forming plate 49 where the tapered surface 50 is not formed.

Additionally, according to the present embodiment, the outer tapered surface 51, which is formed in the outer circumferential side of the main burner cylinder 43 and slopes so as to gradually approach the inner circumferential surface of the main burner cylinder 43 as the outer tapered surface extends toward the downstream side, is employed as the tapered surface 50. This makes it possible to suppress a situation in which the premixed gas PM jetted from the main burner cylinder 43 spreads out in radial directions relative to the burner axis Ab. Thus, premixed flame separates from the inner circumferential surface of the combustion liner 10, so that damage to the combustion liner 10 can be suppressed.

To suppress disturbances in the flow of gas flowing along the inner and outer circumferences of the pilot burner cylinder 33 and reduce gas flow resistance, it is preferable that the angle of the tapered surface 50 relative to the burner axis Ab be small. However, as described earlier, according to the present embodiment, the angle θ2 of the outer tapered surface 51b formed in the second outer circumference portion 47 relative to the burner axis Ab is greater than the angle θ1 of the outer tapered surface 51a formed in the first outer circumference portion 46 relative to the burner axis Ab. As illustrated in FIGS. 3 and 7, the pilot burner 30, which jets a gas AF in which fuel and air are not premixed and forms a diffusion flame, is disposed on the side toward the combustor axis Ac of the second outer circumference portion 47 of the main burner cylinder 43. Accordingly, if the premixed gas PM is floating near the downstream end of the part where the second outer circumference portion 47 is formed in the downstream end portion of the main burner cylinder 43, it is possible that the premixed gas PM will ignite near that downstream end. However, according to the present embodiment, although doing so does slightly increase the resistance to the flow of gas flowing in the inner and outer circumferences of the pilot burner cylinder 33, the angle θ2 of the outer tapered surface 51b formed in the second outer circumference portion 47 relative to the burner axis Ab is made greater than the angle θ1 of the outer tapered surface 51a formed in the first outer circumference portion 46 relative to the burner axis Ab in order to ensure that the premixed gas PM jetted from the main burner cylinder 43 moves away from the pilot burner 30.

Additionally, as illustrated in FIG. 4, other main burners 40 are disposed on the circumferential direction sides of the third outer circumference portions 48 of the main burner cylinders 43 (that is, the circumferential direction centered on the combustor axis Ac). As such, to ensure that the premixed gas PM jetted from the main burner cylinder 43 moves away from the other main burners 40 adjacent in the circumferential direction, it is preferable that the angle of the outer tapered surface 51 formed in the third outer circumference portion 48 relative to the burner axis Ab be greater than the angle θ1 of the outer tapered surface 51a formed in the first outer circumference portion 46 relative to the burner axis Ab.

As described thus far, according to the present embodiment, a situation where flames form near the downstream end of the main burner cylinder 43 can be suppressed, which makes it possible to suppress thermal damage and the like in the main burner cylinder 43 and extend the service life of the main burner cylinder 43.

### First Modified Example of Combustor

A first modified example of the combustor according to the embodiment described above will be described using FIG. 9.

The combustor according to the present modified example has the same configuration as the combustor according to the embodiment described above, except that a tapered surface is formed in the downstream end portion of the outside flow path cylinder 60 of the combustor according to the embodiment described above. The tapered surface of the outside flow path cylinder 60 is an outer tapered surface 64, formed in the outer circumferential side of the outside flow path cylinder 60, that slopes so as to gradually approach the inner circumferential surface of the outside flow path cylinder 60 as the outer tapered surface extends toward the downstream side. The tapered surface formation width of the outer tapered surface 64 in the plate thickness direction is no less than half the plate thickness of a part of an outside flow path cylinder-forming plate 63, which forms the main portion 61 of the outside flow path cylinder 60, where the outer tapered surface 64 is not formed.

Thus, according to the present modified example, it is difficult for the first purge air Al flowing along the inner circumferential side of the outside flow path cylinder 60 and the film air A4 flowing along the outer circumferential side of the outside flow path cylinder 60 to form vortices on the downstream side of the downstream end of the outside flow path cylinder 60. As such, according to the present modified example, resistance to the flow of these airs can be suppressed.

In particular, in the present modified example, the outer tapered surface 64 is formed in the outer circumferential side of the outside flow path cylinder 60 as the tapered surface. As a result, the flow of the film air A4 and the first purge air A1 shifts slightly toward the combustor axis Ac (see FIG. 3), or in other words, moves away from the inner circumferential surface of the combustion liner 10, as those airs flow downstream. Thus, according to the present modified example, of the premixed gas PM jetted from the main burner cylinder 43, the premixed gas PM flowing on the outside flow path cylinder 60 side shifts toward the combustor axis Ac as that gas flows downstream. As such, according to the present modified example, thermal damage and the like at the downstream end of the main burner cylinder 43, at the downstream end of the part thereof where the first outer circumference portion 46 is formed, can be further suppressed, and thermal damage and the like to the inner circumferential surface of the combustion liner 10 can be further suppressed as well.

### Second Modified Example of Combustor

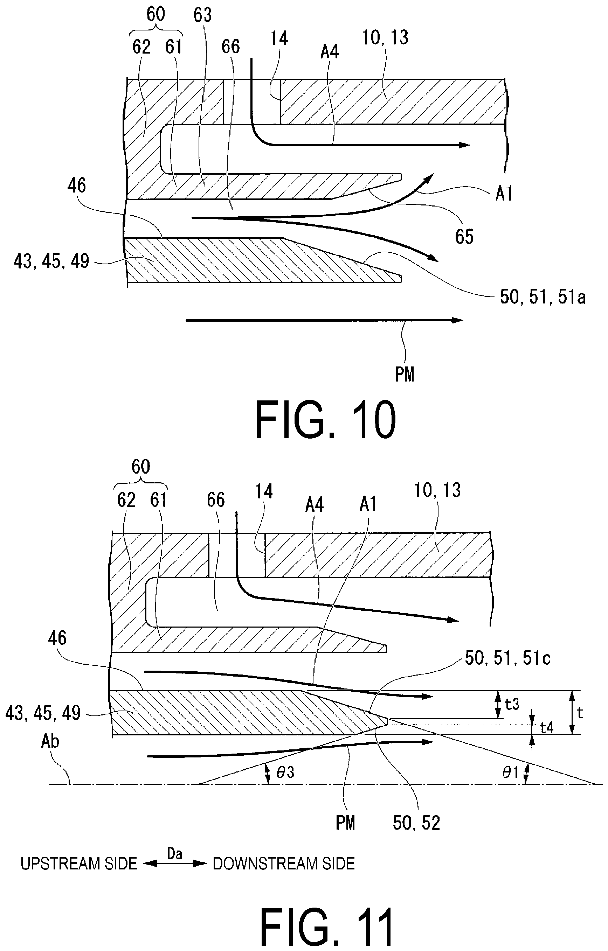

A second modified example of the combustor according to the embodiment described above will be described using FIG. 10.

Like the combustor according to the first modified example, the combustor according to the present modified example is also obtained by forming a tapered surface in the downstream end portion of the outside flow path cylinder 60 of the combustor according to the embodiment described above. However, the tapered surface of the outside flow path cylinder 60 according to the present modified example is an inner tapered surface 65, formed in the inner circumferential side of the outside flow path cylinder 60, that slopes so as to gradually approach the outer circumferential surface of the outside flow path cylinder 60 as the inner tapered surface extends toward the downstream side. The tapered surface formation width of the inner tapered surface 65 in the plate thickness direction is no less than half the plate thickness of a part of the outside flow path cylinder-forming plate 63, which forms the main portion 61 of the outside flow path cylinder 60, where the inner tapered surface 65 is not formed.

Thus, according to the present modified example, it is difficult for the first purge air Al flowing along the inner circumferential side of the outside flow path cylinder 60 and the film air A4 flowing along the outer circumferential side of the outside flow path cylinder 60 to form vortices on the downstream side of the downstream end of the outside flow path cylinder 60. As such, according to the present modified example, resistance to the flow of these airs can be suppressed.

Additionally, according to the present modified example, the inner tapered surface 65 is formed in the inner circumferential side of the outside flow path cylinder 60 as the tapered surface. As a result, the flow the film air A4 and some of the first purge air Al moves slightly away from the combustor axis Ac (see FIG. 3), or in other words, shifts toward the inner circumferential surface of the combustion liner 10, as those airs flow downstream. As such, according to the present modified example, the film air A4 flows along the inner circumferential surface of the combustion liner 10 more than in the above-described embodiment and first modified example, which makes it possible to enhance a film cooling effect in the combustion liner 10.

As described above, different effects are obtained between a case where the outer tapered surface 64 (see FIG. 9) is formed in the outside flow path cylinder 60 and a case where the inner tapered surface 65 is formed in the outside flow path cylinder 60. Accordingly, whether to form the outer tapered surface 64 or the inner tapered surface 65 in the outside flow path cylinder 60 is preferably determined with those different effects weighed against each other.

### Third Modified Example of Combustor

A third modified example of the combustor according to the embodiment described above will be described using FIG. 11.

In the combustor according to the present modified example, an outer tapered surface 51c and an inner tapered surface 52 are formed in the downstream end portion of the main burner cylinder 43. As in the above-described embodiment, the outer tapered surface 51c is a surface, formed in the outer circumferential side of the main burner cylinder 43, that slopes so as to gradually approach the inner circumferential surface of the main burner cylinder 43 as the outer tapered surface extends toward the downstream side. The inner tapered surface 52, meanwhile, is a surface, formed in the inner circumferential side of the main burner cylinder 43, that slopes so as to gradually approach the outer circumferential surface of the main burner cylinder 43 as the inner tapered surface extends toward the downstream side.

In the present modified example, a width obtained by combining a tapered surface formation width t3 of the outer tapered surface 51c in the plate thickness direction and a tapered surface formation width t4 of the inner tapered surface 52 in the plate thickness direction is no less than half the plate thickness t of a part of the burner cylinder-forming plate 49 where the outer tapered surface 51c and the inner tapered surface 52 are not formed. To rephrase, a width of the tapered surface 50, which includes the outer tapered surface 51c and the inner tapered surface 52, in the plate thickness direction, is no less than half the plate thickness t of a part where the tapered surface 50 is not formed. More preferably, a tapered surface formation width of the tapered surface 50 including the outer tapered surface 51c and the inner tapered surface 52, in the plate thickness direction, is no less than 60% of the plate thickness t of the part of the burner cylinder-forming plate 49 where the tapered surface 50 is not formed. Additionally, the tapered surface formation width t3 of the outer tapered surface 51c in the plate thickness direction is greater than the taper formation width t4 of the inner tapered surface 52 in the plate thickness direction.

As in the above-described embodiment, an angle θ1 of the outer tapered surface 51c relative to the burner axis Ab is no greater than 50° and no less than 20° (50° ≥ θ1 ≥ 20°). Meanwhile, an angle θ3 of the inner tapered surface 52 relative to the burner axis Ab is also no greater than 50° and no less than 20° (50° ≥ θ3 ≥ 20°). Note that each angle of a surface relative to the axis is one of two angles in a supplementary angle relationship. In this application, the smaller of the two angles in a supplementary angle relationship is taken as the angle of the tapered surface 50 relative to the axis. The angle θ1 of the outer tapered surface 51c relative to the burner axis Ab and the angle θ3 of the inner tapered surface 52 relative to the burner axis Ab need not be the same angle.

As described above, according to the present modified example, a width of the tapered surface 50, which is a combination of the outer tapered surface 51c and the inner tapered surface 52, in the plate thickness direction, is no less than half the plate thickness t of a part where the tapered surface 50 is not formed, as in the above-described embodiment and modified examples. Accordingly, the premixed gas PM and the first purge air Al will substantially not form vortices on the downstream side of the downstream end of the main burner cylinder 43, or even if such vortices are formed, those vortices will be small. Thus, according to the present modified example as well, thermal damage and the like in the main burner cylinder 43 can be suppressed and the service life of the main burner cylinder 43 can be extended.

Additionally, according to the present modified example, the tapered surface formation width t3 of the outer tapered surface 51c in the plate thickness direction is greater than the taper formation width t4 of the inner tapered surface 52 in the plate thickness direction. Accordingly, on the downstream side of the downstream end of the main burner cylinder 43, the flow of the first purge air A1 flowing along the outer tapered surface 51c has greater influence than the flow of the premixed gas PM flowing along the inner tapered surface 52, and thus a situation where the premixed gas PM jetted from the main burner cylinder 43 spreads out in radial directions relative to the burner axis Ab can be suppressed.

### Fourth Modified Example of Combustor

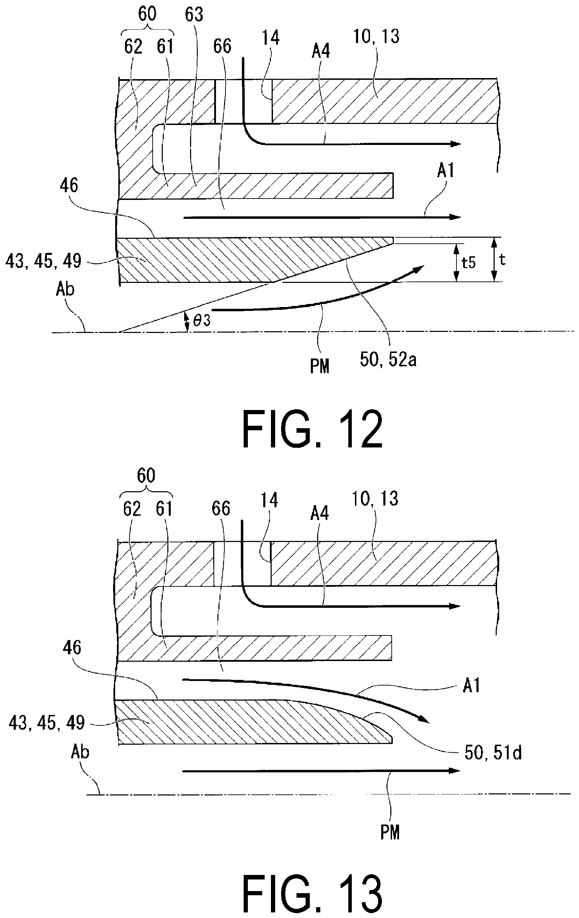

A fourth modified example of the combustor according to the embodiment described above will be described using FIG. 12.

In the combustor according to the present modified example, an inner tapered surface 52a is formed in the downstream end portion of the main burner cylinder 43. The inner tapered surface 52a is a surface, formed in the inner circumferential side of the main burner cylinder 43, that slopes so as to gradually approach the outer circumferential surface of the main burner cylinder 43 as the inner tapered surface extends toward the downstream side.

In the present modified example, a tapered surface formation width t5 of the inner tapered surface 52a in the plate thickness direction is no less than half the plate thickness t of a part of the burner cylinder-forming plate 49 where the inner tapered surface 52a is not formed. More preferably, the tapered surface formation width t5 of the inner tapered surface 52a in the plate thickness direction is no less than 60% of the plate thickness t of the part of the burner cylinder-forming plate 49 where the inner tapered surface 52a is not formed. An angle θ3 of the inner tapered surface 52a relative to the burner axis Ab is no greater than 50° and no less than 20° (50° ≥ θ3 ≥ 20°).

In the present modified example, the width t5 of the inner tapered surface 52a in the plate thickness direction is no less than half the plate thickness t of the part where the inner tapered surface 52a is not formed, as described above. Accordingly, the premixed gas PM and the first purge air A1 will substantially not form vortices on the downstream side of the downstream end of the main burner cylinder 43, or even if such vortices are formed, those vortices will be small. Thus, according to the present modified example as well, thermal damage and the like in the main burner cylinder 43 can be suppressed and the service life of the main burner cylinder 43 can be extended.

Note that in the present modified example, the inner tapered surface 52a is formed as the tapered surface 50, and thus unlike the above-described embodiment and modified examples, the premixed gas PM jetted from the main burner cylinder 43 tends to spread out in radial directions relative to the burner axis Ab. Accordingly, the present modified example may be employed in a case where thermal damage to the inner circumferential surface of the combustion liner 10 can be suppressed even if the premixed gas PM jetted from the main burner cylinder 43 spreads out slightly in radial directions relative to the burner axis Ab, such as in a case where a sufficient effect of cooling such as film cooling can be anticipated for the inner circumferential surface of the combustion liner 10, or a case where there is a long distance from the main burners 40 to the inner circumferential surface of a combustor basket in radial directions centered on the combustor axis Ac (see FIG. 3).

### Fifth Modified Example of Combustor

A fifth modified example of the combustor according to the embodiment described above will be described using FIG. 13.

In the above-described embodiment and modified examples, the tapered surfaces have shapes that are straight lines on a virtual plane that contains the axis and intersects with the tapered surfaces. However, as long as the tapered surface is such that the plate thickness of the cylinder-forming plate gradually thins as the cylinder-forming plate extends toward the downstream side, the tapered surface may have a shape that is a curve on the virtual plane that contains the axis and intersects with the tapered surface.

For example, as illustrated in FIG. 13, an outer tapered surface 51d formed in a downstream end portion of the main burner cylinder 43 is a smooth curved surface, convex in a direction away from the burner axis Ab, on a virtual plane that contains the burner axis Ab and intersects with the outer tapered surface 51d. This curved surface may be a smooth curved surface that is concave in a direction toward the burner axis Ab.

FIG. 13 illustrates an example pertaining to the outer tapered surface 51d formed in the downstream end portion of the main burner cylinder 43. However, as long as the tapered surface is such that the plate thickness of the cylinder-forming plate gradually thins as the cylinder-forming plate extends toward the downstream side, the inner tapered surface formed in the downstream end portion of the main burner cylinder 43, the tapered surface formed in the outside flow path cylinder 60, and so on may each have a shape that is a curve on the virtual plane that contains the axis and intersects with the tapered surface.

Additionally, in the case where a tapered surface having a shape that is a curve on the virtual plane that contains the axis and intersects with the tapered surface is used, an average angle of the tapered surface relative to the axis or an angle of a line connecting an upstream end and a downstream end of the tapered surface relative to the axis is used as the angle of the tapered surface relative to the axis.

### Industrial Applicability

According to an aspect of the present invention, thermal damage and the like in a burner cylinder can be suppressed and the service life of a combustor can be extended.

### Reference Signs List

- 1: Compressor
- 4: Combustor
- 5: Turbine
- 10: Combustion liner
- 11: Connecting portion
- 13: Combustion portion
- 15: Combustion gas guide portion
- 20: Fuel jetting device
- 30: Pilot burner (second burner or diffusion combustion burner)
- 31: Pilot nozzle
- 32: Revolving plate
- 33: Pilot burner cylinder
- 34: Main portion
- 35: Cone portion
- 40: Main burner (first burner or premixed combustion burner)
- 41: Main nozzle
- 42: Revolving plate
- 43: Main burner cylinder
- 44: Main portion
- 45: Extended portion
- 46: First outer circumference portion
- 47: Second outer circumference portion
- 48: Third outer circumference portion
- 49: Burner cylinder-forming plate
- 50: Tapered surface
- 51,: 51a, 51b, 51c, 51d Outer tapered surface
- 52,: 52a Inner tapered surface
- 60: Outside flow path cylinder
- 64: Outer tapered surface
- 65: Inner tapered surface
- 66: First purge air flow path
- 67: Second purge air flow path
- 68: Third purge air flow path
- Ab: Burner axis
- Ac: Combustor axis
- Ar: Rotational axis
- Da: Axial direction
- A: Air
- A1: First purge air
- A2: Second purge air
- A4: Film air
- F: Fuel
- PM: Premixed gas

## Claims

1. A combustor (4) comprising:
a nozzle (41), having a rod-shaped portion centered on a burner axis (Ab), that sprays fuel;
a burner cylinder (43), having a cylindrical shape surrounding an outer circumference of the nozzle (41); and
an outside flow path cylinder (60), surrounding an outer circumference of at least a downstream end portion of the burner cylinder (43), that forms, between an outer circumferential side of the burner cylinder (43) and an inner circumferential side of the outside flow path cylinder (60), a purge air flow path (66) along which air flows toward the downstream side,
wherein
the burner cylinder (43) covers the outer circumference of the nozzle (41) and
a plurality of revolving plates (42) are provided, each of the revolving plates (42) extending from the outer circumference of the nozzle (41) in a direction including a radial direction component, and being connected to an inner circumferential surface of the burner cylinder (43), so as to cause the air to swirl around the burner axis (Ab); and
a tapered surface (50, 51, 51a, 51b, 51c, 51d, 52) is formed in the downstream end portion of the burner cylinder (43) such that a plate thickness of a burner cylinder-forming plate (49) that forms the burner cylinder (43) gradually thins as the burner cylinder-forming plate (49) extends toward the downstream side, **characterized in that** a tapered surface formation width (t1, t2, t3, t4, t5) of the tapered surface (50, 51, 51a, 51b, 51c, 51d, 52) in a plate thickness direction is no less than half a plate thickness (t) of a part of the burner cylinder-forming plate (49) where the tapered surface (50, 51, 51a, 51b, 51c, 51d, 52) is not formed, and **in that**
a spraying hole for spraying the fuel is formed in a part midway along the nozzle (41) in the axial direction (Da) along which the burner axis (Ab) extends; **in that** the plurality of revolving plates (42) are provided near a location where the spraying hole is formed in the nozzle (41); and **in that** compressed air flowing into the burner cylinder (43) at an upstream side thereof and fuel sprayed from the main nozzle (41) are mixed in the main burner cylinder (43) and form a premixed gas PM which is jetted from the downstream end of the main burner cylinder (43).

2. The combustor (4) according to claim 1,
wherein an outer tapered surface (51, 51a, 51b, 51c, 51d) is formed in the outer circumferential side of the burner cylinder (43) as the tapered surface (50), and a tapered surface formation width (t1, t2, t3) of the outer tapered surface (51, 51a, 51b, 51c, 51d) in the plate thickness direction is no less than half the plate thickness (t) of the part of the burner cylinder-forming plate (49) where the tapered surface (50) is not formed.

3. The combustor (4) according to claim 1,
wherein as the tapered surface (50), an outer tapered surface (51c) is formed in the outer circumferential side of the burner cylinder (43) and an inner tapered surface (52) is formed in an inner circumferential side of the burner cylinder (43), and a width obtained by combining the tapered surface formation width (t3) of the outer tapered surface (51c) in the plate thickness direction and a taper formation width (t4) of the inner tapered surface (52) in the plate thickness direction is no less than half the plate thickness (t) of the part of the burner cylinder-forming plate (49) where the tapered surface (50) is not formed.

4. The combustor (4) according to claim 3,
wherein the tapered surface formation width (t3) of the outer tapered surface (51c) in the plate thickness direction is greater than the taper formation width (t4) of the inner tapered surface (52) in the plate thickness direction.

5. The combustor (4) according to claim 1,
wherein an inner tapered surface (52a) is formed in an inner circumferential side of the burner cylinder (43) as the tapered surface (50), and a taper formation width (t5) of the inner tapered surface (52a) in the plate thickness direction is no less than half the plate thickness (t) of the part of the burner cylinder-forming plate (49) where the tapered surface (50) is not formed.

6. The combustor (4) according to any one of claims 2 to 4, comprising:
a plurality of burners (40), each having the nozzle (41) and the burner cylinder (43),
wherein the burner axes (Ab) of the plurality of burners (40) are parallel to each other;
at least a first outer circumference portion (46) that is a part of the outer circumference of the burner cylinder (43) of a first burner (40) that is one of the plurality of burners (40) faces a part of an inner circumference of the outside flow path cylinder (60) such that a first purge air flow path (66) serving as the purge air flow path (66) is formed between the first outer circumference portion (46) and the part of the inner circumference of the outside flow path cylinder (60);
a second purge air flow path (67) in which air flows toward the downstream side is formed between a part of an outer circumference of the burner cylinder (43) of a second burner (30) that, of the plurality of burners (40), is adjacent to the first burner (40), and a second outer circumference portion (47) that is a part of the outer circumference of the burner cylinder (43) of the first burner (40); and
an angle (θ2) of the outer tapered surface (51b) in the second outer circumference portion (47) relative to the burner axis (Ab) is greater than an angle (θ1) of the outer tapered surface (51a) in the first outer circumference portion (46) relative to the burner axis (Ab).

7. The combustor (4) according to claim 6,
wherein the first burner (40) is a premixed combustion burner that burns fuel jetted from the burner cylinder (43) of the first burner (40) through premixed combustion;
the second burner (30) is a diffusion combustion burner that burns fuel jetted from the burner cylinder (43) of the second burner (30) through diffusion combustion;
a plurality of the first burners (40) are arranged in a circumferential direction centered on the second burner (30); and
the outside flow path cylinder (60) has a cylindrical shape centered on the second burner (30) so as to cover the plurality of first burners (40).

8. The combustor (4) according to any one of claims 1 to 7,
wherein a tapered surface (50) is formed in a downstream end portion of the outside flow path cylinder (60) such that a plate thickness of an outside flow path cylinder-forming plate (63) that forms the outside flow path cylinder (60) gradually thins as the outside flow path cylinder-forming plate (63) extends toward the downstream side, and a tapered surface formation width of the tapered surface in the plate thickness direction is no less than half the plate thickness of the outside flow path cylinder-forming plate (63).

9. A gas turbine comprising:
the combustor (4) according to any one of claims 1 to 8;
a compressor (1) that compresses air and supplies the air to the combustor (4); and
a turbine (5) that is driven by combustion gas formed by burning a fuel in the combustor (4).

## Patentansprüche

1. Brennkammer (4) umfassend:
eine Düse (41), die einen stabförmigen Abschnitt aufweist, der auf einer Brennerachse (Ab) zentriert ist und Brennstoff versprüht;
einen Brennerzylinder (43), der eine zylindrische Form aufweist, die einen äußeren Umfang der Düse (41) umgibt; und
einen äußeren Strömungswegzylinder (60), der einen äußeren Umfang mindestens eines stromabwärtigen Endabschnitts des Brennerzylinders (43) umgibt und der zwischen einer äußeren Umfangsseite des Brennerzylinders (43) und einer inneren Umfangsseite des äußeren Strömungswegzylinders (60) einen Spülluftströmungsweg (66) bildet, entlang dem Luft in Richtung der stromabwärtigen Seite strömt,
wobei der Brennerzylinder (43) den äußeren Umfang der Düse (41) abdeckt; und
eine Vielzahl von drehenden Platten (42) vorgesehen ist, wobei sich jede der drehenden Platten (42) von dem äußeren Umfang der Düse (41) in eine Richtung erstreckt, die eine radiale Richtungskomponente beinhaltet, und mit einer inneren Umfangsfläche des Brennerzylinders (43) verbunden ist, um zu bewirken, dass die Luft um die Brennerachse (Ab) herum verwirbelt wird; und
und eine sich verjüngende Oberfläche (50, 51, 51a, 51b, 51c, 51d, 52) in dem stromabwärtigen Endabschnitt des Brennerzylinders (43) so gebildet ist, dass eine Plattendicke einer Brennerzylinder bildenden Platte (49), die den Brennerzylinder (43) bildet, allmählich dünner wird, wenn sich die Brennzylinder bildende Platte (49) in Richtung der stromabwärtigen Seite hin erstreckt, **dadurch gekennzeichnet, dass** eine Bildungsbreite (t1, t2, t3, t4, t5) einer sich verjüngenden Oberfläche der sich verjüngenden Oberfläche (50, 51, 51a, 51b, 51c, 51d, 52) in einer Plattendickenrichtung nicht weniger als eine halbe Plattendicke (t) eines Teils der Brennerzylinder bildenden Platte (49) ist, wo die sich verjüngende Oberfläche (50, 51, 51a, 51b, 51c, 51d, 52) nicht gebildet ist, und dass
ein Sprühloch zum Sprühen des Brennstoffs in einem Teil auf halber Strecke entlang der Düse (41) in der axialen Richtung (Da), entlang welcher sich die Brennerachse (Ab) erstreckt, gebildet ist;
**und dadurch dass**
die Vielzahl der drehenden Platten (42) nahe einer Stelle vorgesehen sind, an der das Sprühloch in der Düse (41) gebildet ist; und **dass**
komprimierte Luft, die in den Brennerzylinder (43) an einer stromaufwärtigen Seite desselben strömt, und Brennstoff, der aus der Hauptdüse (41) gesprüht wird, in dem Hauptbrennerzylinder (43) gemischt werden und ein vorgemischtes Gas PM bilden, welches aus dem stromabwärtigen Ende des Hauptbrennerzylinders (43) ausgestoßen wird.

2. Brennkammer (4) gemäß Anspruch 1,
wobei eine äußere sich verjüngende Oberfläche (51, 51a, 51b, 51c, 51d) in der äußeren Umfangsseite des Brennerzylinders (43) als die sich verjüngende Oberfläche (50) gebildet ist, und eine sich verjüngende Oberflächen-Bildungsbreite (t1, t2, t3) der äußeren sich verjüngenden Oberfläche (51, 51a, 51b, 51c, 51d) in der PlattendickenRichtung nicht weniger als die Hälfte der Plattendicke (t) des Teils der Brennerzylinder bildenden Platte (49) ist, wo die sich verjüngende Oberfläche (50) nicht gebildet ist.

3. Brennkammer (4) gemäß Anspruch 1,
wobei als sich verjüngende Oberfläche (50) eine äußere sich verjüngende Oberfläche (51c) in der äußeren Umfangsseite des Brennerzylinders (43) gebildet ist und eine innere sich verjüngende Oberfläche (52) in einer inneren Umfangsseite des Brennerzylinders (43) gebildet ist, und eine Breite, die durch Kombinieren der sich verjüngenden Oberflächenbildungsbreite (t3) der äußeren sich verjüngenden Oberfläche (51c) in der Plattendickenrichtung und einer Verjüngungsbildungsbreite (t4) der inneren sich verjüngenden Oberfläche (52) in der Plattendickenrichtung erhalten wird, nicht weniger als die Hälfte der Plattendicke (t) der Brennerzylinder bildenden Platte (49) ist, wo die sich verjüngende Oberfläche (50) nicht gebildet ist.

4. Brennkammer (4) gemäß Anspruch 3,
wobei die sich verjüngende Oberflächenbildungsbreite (t3) der äußeren sich verjüngenden Oberfläche (51c) in der Plattendickenrichtung größer als die Verjüngungsbildungsbreite (t4) der inneren sich verjüngenden Oberfläche (52) in der Plattendickenrichtung ist.

5. Brennkammer (4) gemäß Anspruch 1,
wobei eine innere sich verjüngende Oberfläche (52a) in einer inneren Umfangsseite des Brennerzylinders (43) als die sich verjüngende Oberfläche (50) gebildet ist, und eine Verjüngungsbildungsbreite (t5) der inneren sich verjüngenden Oberfläche (52a) in der Plattendickenrichtung nicht weniger als die Hälfte der Plattendicke (t) des Teils der Brennerzylinder bildenden Platte (49) ist, wo die sich verjüngende Oberfläche (50) nicht gebildet ist.

6. Brennerkammer (4) gemäß einem der Ansprüche 2 bis 4, umfassend:
eine Vielzahl von Brennern (40), die jeweils eine Düse (41) und den Brennerzylinder (43) aufweisen,
wobei die Brennerachsen (Ab) der Vielzahl von Brennern (40) parallel zueinander sind;
mindestens einen erster äußeren Umfangsabschnitt (46), der ein Teil des äußeren Umfangs des Brennerzylinders (43) eines ersten Brenners (40) ist, der einer der Vielzahl von Brennern (40) ist, der einem Teil des inneren Umfangs des äußeren Strömungswegzylinders (60) zugewandt ist, so dass ein erster Spülluftströmungsweg (66), der als Spülluftströmungsweg (66) dient, zwischen dem ersten äußeren Umfangsabschnitt (46) und dem Teil des inneren Umfangs des äußeren Strömungswegzylinders (60) gebildet ist;
einen zweiten Spülluftströmungsweg (67) in welchem Luft in Richtung der stromabwärtigen Seite strömt, der zwischen einem Teil eines äußeren Umfangs des Brennerzylinders (43) eines zweiten Brenners (30), der, aus der Vielzahl von Brennern (40), angrenzend an den ersten Brenner (40) ist, und einem zweiten äußeren Umfangsabschnitt (47), der ein Teil des äußeren Umfangs des Brennerzylinders (43) des ersten Brenners (40) ist, gebildet ist; und
einen Winkel (θ2) der äußeren sich verjüngenden Oberfläche (51b) in dem zweiten äußeren Umfangsabschnitt (47) relativ zu der Brennerachse (Ab), der größer ist als ein Winkel (θ1) der äußeren sich verjüngenden Oberfläche (51a) in dem ersten äußeren Umfangsabschnitt (46) relativ zu der Brennerachse (Ab).

7. Brennkammer (4) gemäß Anspruch 6,
wobei der erste Brenner (40) ein Brenner mit vorgemischter Verbrennung ist, der aus dem Brennerzylinder (43) des ersten Verbrenners (40) ausgestoßenen Brennstoff durch eine vorgemischte Verbrennung verbrennt;
der zweite Brenner (30) ein Brenner mit Diffusionsverbrennung ist, der aus dem Brennerzylinder (43) des zweiten Verbrenners (30) ausgestoßenen Brennstoff durch Diffusionsverbrennung verbrennt;
eine Vielzahl der ersten Brenner (40) in einer Umfangsrichtung zentriert auf dem zweiten Brenner (30) angeordnet sind; und
der äußere Strömungswegzylinder (60) eine zylindrische Form zentriert um den zweiten Brenner (30) zentriert hat, um die Vielzahl der ersten Brenner (40) abzudecken.

8. Verbrenner (40) gemäß einem der Ansprüche 1 bis 7, wobei eine sich verjüngende Oberfläche (50) in einem stromabwärtigen Endabschnitt des äußeren Strömungswegzylinders (60) gebildet ist, so dass eine Plattendicke einer äußeren Zylinder bildende Platte (63), die den äußeren Strömungswegzylinder (60) bildet, allmählich dünner wird, wenn sich die den äußeren Strömungswegzylinder bildende Platte (63) in Richtung der stromabwärtigen Seite erstreckt, und eine sich verjüngende Bildungsbreite der sich verjüngenden Oberfläche in der Plattendickenrichtung nicht weniger als die Hälfte der Plattendicke der den äußeren Strömungswegzylinder bildenden Platte (63) ist.

9. Gasturbine umfassend:
den Verbrenner (4) gemäß einem der Ansprüche 1 bis 8;
einen Kompressor (1), der Luft komprimiert und die Luft der Brennkammer (4) zuführt; und
eine Turbine (5), die durch Verbrennungsgas angetrieben wird, das durch Verbrennen eines Brennstoffs in der Brennkammer (4) gebildet wird.

## Revendications

1. Une chambre de combustion (4) comprenant :
une buse (41), possédant une partie en forme de tige centrée sur un axe de brûleur (Ab), qui pulvérise du combustible ;
un cylindre de brûleur (43), possédant une forme cylindrique entourant une circonférence externe de la buse (41) ; et
un cylindre de trajet d'écoulement vers l'extérieur (60), entourant une circonférence externe d'au moins une partie d'extrémité aval du cylindre de brûleur (43), qui forme,
entre un côté circonférentiel externe du cylindre de brûleur (43) et un côté circonférentiel interne du cylindre de trajet d'écoulement vers l'extérieur (60), un trajet de flux d'air de purge (66) le long duquel l'air s'écoule en direction du côté aval,
dans laquelle
le cylindre de brûleur (43) couvre la circonférence externe de la buse (41) ; et
il est prévu une pluralité de plaques tournantes, chacune des plaques tournantes (42) s'étendant à partir de la circonférence externe de la buse (41) dans une direction incluant une composante de direction radiale, et qui sont reliées à une surface circonférentielle interne du cylindre de brûleur (43) de manière à faire en sorte que l'air tourbillonne autour de l'axe de brûleur (Ab) ; et
une surface rétrécie (50, 51, 51a, 51b, 51c, 51d, 52) est formée dans la partie d'extrémité aval du cylindre de brûleur (43) de telle sorte qu'une épaisseur de plaque d'une plaque formant cylindre de brûleur (49) qui forme le cylindre de brûleur (43) s'amincisse progressivement au fur et à mesure que la plaque formant le cylindre de brûleur (49) s'étende en direction du côté aval, **caractérisée en ce que** une largeur de formation de la surface rétrécie (d1, d2, d3, d4, d5) de la surface rétrécie (50, 51, 51a, 51b, 51c, 51d, 52) dans une direction d'épaisseur de la plaque ne soit pas inférieure à la moitié d'une épaisseur de plaque (t) d'une partie de la plaque formant le cylindre de brûleur (49) où la surface rétrécie (50, 51, 51a, 51b, 51c, 51d, 52) n'est pas formée ; **en ce que**
un orifice de pulvérisation pour la pulvérisation du combustible est formé dans une partie à mi-distance le long de la buse (41) dans la direction axiale (Da) le long duquel s'étend l'axe de brûleur (Ab) ; **en ce que**
la pluralité de plaques tournantes (42) sont disposées à proximité d'un emplacement où l'orifice de pulvérisation est formé dans la buse (41) ; **et en ce que**
l'air comprimé s'écoulant dans le cylindre de brûleur (43) au niveau d'un côté amont de celui-ci, et le combustible pulvérisé par la buse principale (41), sont mélangés dans le cylindre de brûleur principal (43) et forment un gaz prémélangé PM qui est expulsé par l'extrémité aval du cylindre de brûleur principal.

2. La chambre de combustion (4) selon la revendication 1,
dans laquelle une surface rétrécie externe (51, 51a, 51b, 51c, 51d) est formée dans le côté circonférentiel externe du cylindre de brûleur (43) en tant que surface rétrécie (50), et une largeur de formation de la surface rétrécie (t1, t2, t3) de la surface rétrécie externe (51, 51a, 51b, 51c, 51d) dans la direction de l'épaisseur de la plaque n'est pas inférieure à la moitié de l'épaisseur de plaque (t) de la partie de la plaque formant le cylindre de brûleur (49) où la surface rétrécie (50) n'est pas formée.

3. La chambre de combustion (4) selon la revendication 1,
dans laquelle, en tant que surface rétrécie (50), une surface rétrécie externe (51c) est formée dans le côté circonférentiel externe du cylindre de brûleur (43) et une surface rétrécie interne (52) est formée dans un côté circonférentiel interne du cylindre de brûleur (43), et une largeur obtenue en combinant la largeur de formation de la surface rétrécie (t3) de la surface rétrécie externe (51c) dans la direction de l'épaisseur de plaque et une largeur de formation rétrécie (t4) de la surface rétrécie interne (52) dans la direction de l'épaisseur de plaque n'est pas inférieure à la moitié de l'épaisseur de plaque (t) de la partie de la plaque formant le cylindre de brûleur (49) où la surface rétrécie (50) n'est pas formée.

4. La chambre de combustion (4) selon la revendication 3,
dans laquelle la largeur de formation de la surface rétrécie (t3) de la surface rétrécie externe (51c) dans la direction de l'épaisseur de plaque est supérieure à la largeur de formation rétrécie (t4) de la surface rétrécie interne (52) dans la direction d'épaisseur de plaque.

5. La chambre de combustion (4) selon la revendication 1,
dans laquelle une surface rétrécie interne (52a) est formée dans un côté circonférentiel interne du cylindre de brûleur (43) en tant que surface rétrécie (50), et une largeur de formation rétrécie (t5) de la surface rétrécie interne (52a) dans la direction d'épaisseur de plaque n'est pas inférieure à la moitié de l'épaisseur de plaque (t) de la partie de la plaque formant le cylindre de brûleur (49) où la surface rétrécie (50) n'est pas formée.

6. La chambre de combustion (4) selon l'une des revendications 2 à 4, comprenant :
une pluralité de brûleurs (40), chacun possédant la buse (41) et le cylindre de brûleur (43),
dans laquelle les axes de brûleur (Ab) de la pluralité de brûleurs (40) sont parallèles les uns aux autres ;
au moins une première partie de circonférence externe (46) qui est une partie de la circonférence externe du cylindre de brûleur (43) d'un premier brûleur (40) qui est l'un de la pluralité de brûleurs (40) est tournée vers une partie d'une circonférence interne du cylindre de trajet d'écoulement vers l'extérieur (60) de telle sorte qu'un premier trajet d'écoulement d'air de purge (66) servant de trajet d'écoulement d'air de purge (66) soit formé entre la première partie de circonférence externe (46) et la partie de la circonférence interne du cylindre d'écoulement de flux vers l'extérieur (60) ;
un second trajet d'écoulement d'air de purge (67) dans lequel de l'air s'écoule en direction du côté aval est formé entre une partie d'une circonférence externe du cylindre de brûleur (43) d'un second brûleur (30) qui, parmi la pluralité de brûleurs (40), est adjacent au premier brûleur (40), et une seconde partie de circonférence externe (47) qui est une partie de la circonférence externe du cylindre de brûleur (43) du premier brûleur (40) ; et
un angle (θ2) de la surface rétrécie externe (51b) dans la seconde partie de circonférence externe (47) par rapport à l'axe de brûleur (Ab) est supérieur à un angle (θ1) de la surface rétrécie externe (51a) dans la première partie de circonférence externe (46) par rapport à l'axe de brûleur (Ab).

7. La chambre de combustion (4) selon la revendication 6,
dans laquelle le brûleur (40) est un brûleur de combustion de prémélange qui fait brûler du combustible expulsé du cylindre de brûleur (43) du premier brûleur (40) par combustion en prémélange ;
le second brûleur (30) est un brûleur de combustion à diffusion qui fait brûler du combustible expulsé du cylindre de brûleur (43) du second brûleur (30) par combustion en diffusion ;
une pluralité des premiers brûleurs (40) sont agencés dans une direction circonférentielle centrée sur le second brûleur (30) ; et
le cylindre de trajet d'écoulement vers l'extérieur (60) a une forme cylindrique centrée sur le second brûleur (30) de manière à couvrir la pluralité de premiers brûleurs (40).

8. La chambre de combustion (4) selon l'une des revendications 1 à 7,
dans laquelle une surface rétrécie (50) est formée dans une partie d'extrémité aval du cylindre de trajet d'écoulement vers l'extérieur (60) de telle sorte qu'une épaisseur de plaque d'une plaque formant cylindre du trajet d'écoulement vers l'extérieur (63) qui forme le cylindre de trajet d'écoulement vers l'extérieur (60) s'amincisse progressivement au fur et à mesure que la plaque formant le cylindre d'écoulement du flux vers l'extérieur (63) s'étend en direction du côté aval, et une largeur de formation de surface rétrécie de la surface rétrécie dans la direction d'épaisseur de plaque n'est pas inférieure à la moitié de l'épaisseur de plaque de la plaque formant le cylindre d'écoulement de flux vers l'extérieur (63).

9. Une turbine à gaz comprenant :
la chambre de combustion (4) selon l'une des revendications 1 à 8 ;
un compresseur (1) qui comprime de l'air et délivre l'air à la chambre de combustion (4) ; et
une turbine (5) qui est entraînée par les gaz de combustion formés par combustion d'un combustible dans la chambre de combustion (4).
